# EUROPEAN PATENT APPLICATION

(11) **EP 3 705 687 A1**
(43) Date of publication of application: **09.09.2020**
(21) Application number: 19219547.7
(22) Date of filing: 23.12.2019
(51) Int. Cl.: F01D 11/00, F02C 6/08, F02C 7/28, F16J 15/50, F01D 9/06, F16J 15/06, F16J 15/08

(54) **SLIDER SEAL**

(30) Priority: 04.03.2019 US 201916291185
(71) Applicant: United Technologies Corporation, Farmington, CT 06032 (US)
(72) Inventor: THOMAS, Michael R., Bloomfield, CT Connecticut 06002 (US)
(74) Representative: Dehns

(57) **Abstract**

A seal assembly (130; 230; 330; 430) is disclosed. In various embodiments, the seal assembly includes a housing (232; 332; 432); a seal member (234; 334; 434) configured for disposition within the housing, the seal member (234; 334; 434) comprising a tube section (241; 341; 441) defining an inner tube surface (260; 360; 460) configured to receive an interface component (250; 350; 450) and having a length and an inner tube surface radius (345) that is substantially constant along the length; and a retaining ring (236; 336; 436) configured to retain the seal member (234; 334; 434) within the housing (232; 332; 432) and to confine translational movement of the seal member (234; 334; 434) with respect to the housing (232; 332; 432) to two degrees of freedom. In various embodiments, the seal assembly (130; 230; 330; 430) is configured to provide three degrees of translational movement and three degrees of rotational movement of the interface component (250; 350; 450) with respect to the housing (232; 332; 432).

## Description

### GOVERNMENT LICENSE RIGHTS

This disclosure was made with Government support under contract FA8626-16-C-2139, awarded by the United Stated Air Force. The Government has certain rights in the disclosure.

### FIELD

The present disclosure relates generally to gas turbine engines and, more particularly, to slider seal assemblies used to prevent leakage of gases through openings in casings and casing-like structures within gas turbine engines.

### BACKGROUND

Gas turbine engines typically include a fan section, a compressor section, a combustor section and a turbine section. During operation, air is pressurized in the compressor section and mixed with fuel and burned in the combustor section to generate hot combustion gases. The hot combustion gases are then communicated through the turbine section, where energy is extracted from the hot combustion gases to power the compressor section, the fan section and various other loads occurring within or proximate a gas turbine engine.

A core engine of a gas turbine engine typically includes the compressor, the combustor and the turbine, each of which is surrounded by a core engine casing. The core engine casing may serve to separate a core flow path, in which gases at high pressure and high temperature flow, from a bypass flow path, in which gases at substantially lower temperature and pressure flow. Other casing-like structures may exist within a gas turbine engine and serve, among other things, to define different flow paths, providing separate passageways for gases flowing at different temperatures and pressures within the gas turbine engine during operation.

Gas turbines engines may also include numerous components, such as fuel fittings, bleed ports, conduits, probes, pins and the like, that are required to extend through openings in the core engine casing or through the other casing-like structures described above. Seal assemblies are required to seal the openings and to minimize or prevent leakage through the openings, particularly where the openings extend through a casing separating gases existing at different pressures and temperatures. The seal assemblies typically include a housing and a metallic seal plate. The housing is mounted to a surface of the casing, the seal plate is affixed adjacent to the housing and the component extends through openings in the seal plate and the housing to provide a seal therebetween.

Slider seals are free floating seals that may be used in gas turbine engines at locations where the various components described above may be required to extend from one side of a core engine casing or other casing-like structure to the other. The seals may be configured to allow the various components described above to translate and rotate in several dimensions with respect to the casing through which they extend, which is usually fixed in space with respect to the gas turbine engine. For example, as a casing and the components extending therethrough change shape or relative position due to increased temperatures during operation, the slider seals allow for relative movement in several dimensions between the casing and the components, thereby limiting gases from one side of the casing to leak toward the other side of the casing.

### SUMMARY

A seal assembly is disclosed. In various embodiments, the seal assembly includes a housing; a seal member configured for disposition within the housing, the seal member comprising a tube section defining an inner tube surface configured to receive an interface component and having a length and an inner tube surface radius that is substantially constant along the length; and a retaining ring configured to retain the seal member within the housing and to confine translational movement of the seal member with respect to the housing to two degrees of freedom.

In various embodiments, the seal member includes a plate section connected to the tube section. In various embodiments, the plate section extends circumferentially about the tube section. In various embodiments, the retaining ring is configured to confine translational movement of the plate section with respect to the housing to the two degrees of freedom.

In various embodiments, the interface component includes an outer component surface configured to slidably engage the inner tube surface along the length. In various embodiments, the outer component surface includes a radial arc portion configured to slidably engage the inner tube surface along the length. In various embodiments, the radial arc portion defines a radial arc-length that extends circumferentially about a central axis of the interface component. In various embodiments, the radial arc portion defines a radius of curvature that is substantially constant along the radial arc-length. In various embodiments, the radius of curvature is substantially equal to the inner tube surface radius along the length.

In various embodiments, the tube section defines a central axis and the interface component includes a radial arc portion configured to enable the interface component to translate in a direction along the central axis with respect to the tube section. In various embodiments, the radial arc portion defines a radius of curvature that is substantially constant along a radial arc-length and is configured to enable the interface component to rotate in three degrees of freedom with respect to the housing.

A slider seal assembly for a gas turbine engine is disclosed. In various embodiments, the slider seal assembly includes a housing configured for mounting to a casing within the gas turbine engine; and a seal member configured for disposition within the housing, the seal member comprising a tube section defining an inner tube surface configured to receive an interface component and having a length and an inner tube surface radius, the seal member retained within the housing and configured to confine translational movement of the seal member with respect to the housing to two degrees of freedom.

In various embodiments, the tube section defines a central axis and the interface component includes a radial arc portion configured to enable the interface component to translate in a direction along the central axis with respect to the tube section. In various embodiments, the radial arc portion defines a radius of curvature that is substantially equal to the inner tube surface radius along a radial arc-length and is configured to enable the interface component to rotate in three degrees of freedom with respect to the tube section.

In various embodiments, the seal member includes a plate section connected to the tube section. In various embodiments, a retaining ring is configured to retain the seal member within a recessed opening within the housing. In various embodiments, a seal ring is disposed within a seal ring groove that extends into the radial arc portion.

A gas turbine engine is disclosed. In various embodiments, the gas turbine engine includes a casing; and a slider seal assembly extending through the casing and configured to secure an interface component and enable three degrees of translational freedom and three degrees of rotational freedom of the interface component with respect to the casing. The slider seal assembly includes a housing, a seal member configured for disposition within the housing, the seal member comprising a tube section defining an inner tube surface configured to receive the interface component and having a length and an inner tube surface radius that is substantially constant along the length, and a retaining ring configured to retain the seal member within the housing and to confine translational movement of the seal member with respect to the housing to two degrees of freedom.

In various embodiments, the tube section defines a central axis and the interface component includes a radial arc portion configured to enable the interface component to translate in a direction along the central axis with respect to the tube section. In various embodiments, the radial arc portion defines a radius of curvature that is substantially equal to the inner tube surface radius along a radial arc-length and is configured to enable the interface component to rotate in three degrees of freedom with respect to the tube section.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A is a schematic view of a gas turbine engine, in accordance with various embodiments;
FIG. 1B is a schematic view of an outer casing of a gas turbine engine, in accordance with various embodiments;
FIGS. 2A and 2B are cutaway perspective and side views of a slider seal assembly, in accordance with various embodiments;
FIGS. 3A and 3B are cutaway perspective and side views of a slider seal assembly, in accordance with various embodiments; and
FIGS. 4A and 4B are cutaway perspective and side views of a slider seal assembly, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

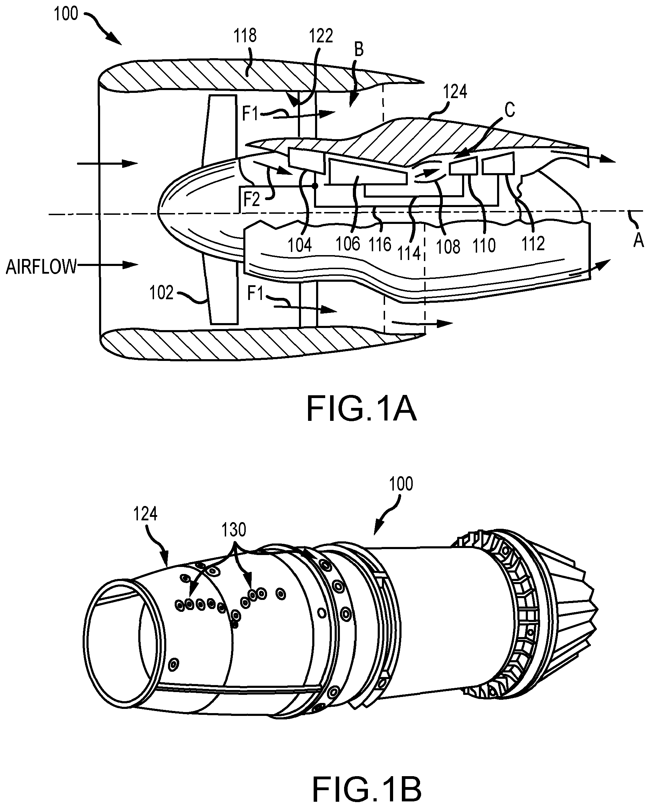

Referring now to the drawings, FIG. 1 illustrates a gas turbine engine 100. In various embodiments, the gas turbine engine 100 includes a fan 102, a low pressure compressor 104, a high pressure compressor 106, a combustor 108, a high pressure turbine 110 and a low pressure turbine 112. During operation, air is pulled into the gas turbine engine 100 by the fan 102, pressurized by the low pressure compressor 104 and the high pressure compressor 106, and then mixed with fuel and burned in the combustor 108. Hot combustion gases generated within the combustor 108 flow through the high pressure turbine 110 and the low pressure turbine 112, which extract energy from the hot combustion gases. In a two spool design, the high pressure turbine 110 powers the high pressure compressor 106 through a high speed shaft 114 and the low pressure turbine 112 powers the fan 102 and the low pressure compressor 104 through a low speed shaft 116. While the foregoing describes a two-spool design, the disclosure contemplates and is applicable to other gas turbine engine designs, such as, for example, single-spool and three-spool designs.

A nacelle 118 is disposed circumferentially about an engine centerline axis A and surrounds the numerous components of the gas turbine engine 100. A bypass flow path B extends between an inner surface 122 of the nacelle 118 and an outer engine casing 124, which houses the low pressure compressor 104, the high pressure compressor 106, the combustor 108, the high pressure turbine 110 and the low pressure turbine 112. A portion F2 of the incoming airflow ("AIRFLOW") enters the gas turbine engine 100 and is communicated through a core flow path C, while the remaining portion F1 of the incoming airflow is communicated through the bypass flow path B to provide thrust for powering the aircraft.

Referring now to FIG. 1B, a plurality of slider seal assemblies 130 is illustrated mounted to the outer engine casing 124 of the gas turbine engine 100. In various embodiments, one or more of the plurality of slider seal assemblies 130 may be mounted adjacent to the sections comprising the low pressure compressor 104, the high pressure compressor 106, the combustor 108, the high pressure turbine 110 and the low pressure turbine 112, or any other section of the gas turbine engine 100. In addition, one or more of the plurality of slider seal assemblies 130 may be mounted adjacent the nacelle 118 (e.g., mounted on the inner surface 122 of the nacelle 118) and configured to seal piping providing compressed air bled from one of the low pressure compressor 104 and the high pressure compressor 106 to components housed within the nacelle 118. In general, and as described further below, the one or more of the plurality of slider seal assemblies 130 is configured to extend through an opening within a casing separating flow paths containing gases existing at different pressures and temperatures and provide a seal against the disparate gases leaking from one flow path to another.

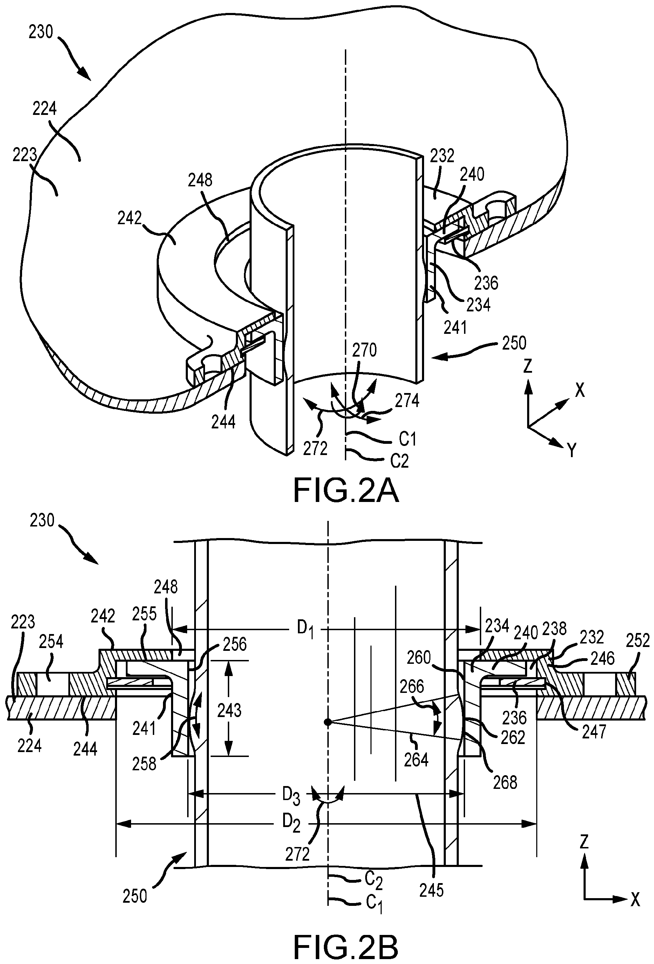

Referring now to FIGS. 2A and 2B, a slider seal assembly 230 (or seal assembly), such as, for example, one of the plurality of slider seal assemblies 130 described above with reference to FIG. 1B, is illustrated. In various embodiments, the slider seal assembly 230 includes a housing 232, a seal member 234 and a retaining ring 236. The seal member 234 includes a plate section 240 and a tube section 241. In various embodiments, the seal member 234 may be constructed of metallic materials or non-metallic materials (e.g., ceramic matrix composite materials or the like). The housing 232 includes a recessed opening 238 for receiving the plate section 240 of the seal member 234. The retaining ring 236 is received within a slot 247 of the recessed opening 238 to retain the plate section 240 within the recessed opening 238. In various embodiments, the plate section 240 extends circumferentially about the tube section 241. In various embodiments, the tube section 241 may extend along a length 243 from the plate section 240 and, as described further below, provides an interior surface configured to slidably engage a corresponding exterior surface of an interface component 250. In various embodiments, the tube section 241 defines a central axis C1 that extends along the length 243 of the tube section 241.

The housing 232 includes an outer surface 242 and an inner surface 244 configured for mounting against a casing 224. In various embodiments, the recessed opening 238 extends circumferentially from the inner surface 244 towards the outer surface 242, thereby defining a cylindrical volume within which the plate section 240 may be received. A body portion 246 of the housing 232 generally surrounds the recessed opening 238 and at least partially houses the seal member 234 within the recessed opening 238. A housing opening 248 having a first diameter D1 extends through the housing 232 and is configured to receive the interface component 250. The housing opening 248 extends into the recessed opening 238, which defines a second diameter D2 that is typically larger than the first diameter D1.

The inner surface 244 of the housing 232 may include a curved portion that is configured to mate smoothly with a face 223 of the casing 224 to which the housing 232 is mounted. The actual dimensions of the curved portion may vary depending upon design specific parameters including, but not limited to, the shape of the face 223 of the casing 224 to which the housing 232 is configured for mounting. The housing 232 also includes one or more flanges 252 disposed radially outwardly from the body portion 246. The one or more flanges 252 are disposed near opposite ends of the housing 232 (or equally spaced about the housing 232) and may include a fastener opening 254 for receiving a fastener to attach the housing 232 to the casing 224.

The plate section 240 is received against an inner wall 255 of the recessed opening 238. In various embodiments, the plate section 240 defines a plate opening 256 which, in various embodiments, has a diameter equal to an inner surface diameter 245 of the tube section 241. The plate opening 256 is positioned adjacent the housing opening 248 of the housing 232 when received within the recessed opening 238. In various embodiments, both the plate opening 256 and the inner surface diameter 245 define a third diameter D3. The third diameter D3 of the plate opening 256 (or the inner surface diameter 245 of the tube section 241) is generally smaller than the first diameter D1 of the housing opening 248. The plate section 240 is configured to translate relative to the housing 232 to compensate for movement of the interface component 250 with respect to the housing 232 (or with respect to the casing 224 to which the housing 232 may be mounted). Referring to the coordinate system illustrated in FIGS. 2A and 2B, the translation of the plate section 240 with respect to the housing 232 comprises generally two degrees of freedom, in the x-y plane. The retaining ring 236 generally prohibits the plate section 240 from translating in the z-direction with respect to the housing 232.

Still referring to FIGS. 2A and 2B, the seal member 234, as described above, also includes the tube section 241 that, in various embodiments, extends from the plate section 240 in a direction substantially perpendicular to the x-y plane in which the plate section 240 is constrained to reside. The tube section 241 defines an inner tube surface 260. In various embodiments, the inner tube surface 260 provides a surface configured to slidably engage an outer component surface 262 which, in various embodiments, may be considered an outer surface of the interface component 250. In various embodiments, the outer component surface 262 is characterized by a radius of curvature 264 that swings through an angle 266, thereby defining a radial arc portion 268 of the outer component surface 262 that extends along a radial arc-length 258. In various embodiments, the radius of curvature 264 is substantially constant along the radial arc-length 258. The radial arc portion 268 also extends in a generally circumferential fashion about a central axis C2 of the interface component 250 and defines an outer diameter (or outer radius) substantially equal to the third diameter D3 (or a radius substantially equal to one-half the third diameter D3). A tolerance of one or two thousands of an inch (≈ 2.5 to 5.0 micrometers) provides sufficient gap to insert the radial arc portion 268 within the inner tube surface 260 and to maintain an interference fit sufficient to form a seal against a fluid or a gas flowing through the gap. While the disclosure refers to the tube section 241 as having a length 243 extending from the plate section 240, the length 243 is more generally defined as a distance through which the interface component 250 is expected to translate (in the z-direction) within the tube section 241.

The intersection of the radial arc portion 268 of the outer component surface 262 with the inner tube surface 260 provides for several additional degrees of freedom of relative movement between the interface component 250 and the housing 232. For example, in various embodiments, the inner tube surface 260, which extends in the z-direction at substantially constant diameter, enables the radial arc portion 268 to translate in the z-direction, thereby allowing three degrees of translational freedom with respect to the housing 232 (e.g., the two degrees of freedom in the x-y plane described above, together with the single degree of freedom in the z-direction just described). Further, if the radius of curvature 264 of the radial arc portion 268 is selected to be substantially equal to one-half the third diameter D3 (or substantially equal to an inner tube surface radius), then the intersection of the radial arc portion 268 with the inner tube surface 260 will enable the interface component 250 to rotate with three degrees of rotational freedom with respect to the housing 232. For example, the interface component 250 may rotate in a first direction 270 about the z-axis, in a second direction 272 in the x-z plane and in a third direction 274 in the y-z plane. Coupled with the three degrees of freedom of translational movement described above, the slider seal assembly 230 above described provides for a full six degrees of translational and rotational movement of the interface component 250 relative to the housing 232 (or relative to the casing 224) due to thermal or vibratory effects occurring during operation.

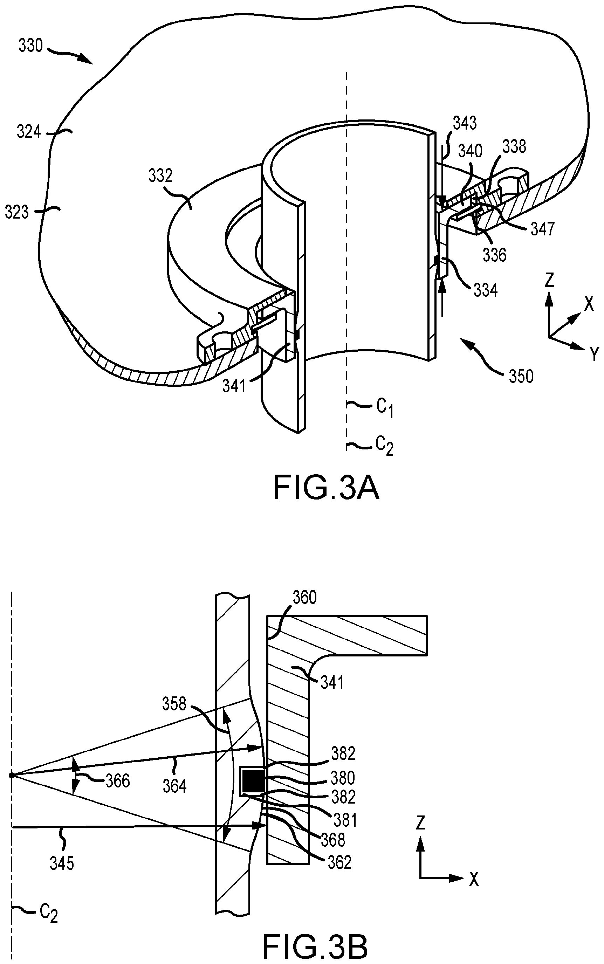

Referring now to FIGS. 3A and 3B, a slider seal assembly 330 (or seal assembly), such as, for example, one of the plurality of slider seal assemblies 130 described above with reference to FIG. 1B, is illustrated. In various embodiments, the slider seal assembly 330 includes a housing 332, a seal member 334 and a retaining ring 336. The seal member 334 includes a plate section 340 and a tube section 341. The housing 332 includes a recessed opening 338 for receiving the plate section 340 of the seal member 334. The retaining ring 336 is received within a slot 347 of the recessed opening 338 to retain the plate section 340 within the recessed opening 338. In various embodiments, the plate section 340 extends circumferentially about the tube section 341. In various embodiments, the tube section 341 may extend along a length 343 from the plate section 340 and, as described further below, provides an interior surface configured to slidably engage a corresponding exterior surface of an interface component 350. In various embodiments, the tube section 341 defines a central axis C1 that extends along the length 343 of the tube section 341. In various embodiments, the housing 332 is configured for mounting to a casing 324 having a face 323 that may, in various embodiments, exhibit either a flat surface or a curved surface. With the exception of the disclosure that follows, the constructional and operational characteristics of the slider seal assembly 330 are the same or similar to the constructional and operational characteristics of the slider seal assembly 230 described above with reference to FIGS. 2A and 2B and, therefore, are not repeated here.

Similar to the description provided above, the seal member 334 includes the tube section 341 that, in various embodiments, extends from the plate section 340 in a direction substantially perpendicular to the x-y plane in which the plate section 340 is constrained to reside. The tube section 341 defines an inner tube surface 360. In various embodiments, the inner tube surface 360 provides a surface configured to slidably engage an outer component surface 362 which, in various embodiments, may be considered an outer surface of the interface component 350. In various embodiments, the outer component surface 362 is characterized by a radius of curvature 364 that swings through an angle 366, thereby defining a radial arc portion 368 of the outer component surface 362 that extends along a radial arc-length 358. In various embodiments, the radius of curvature 364 is substantially constant along the radial arc-length 358. The radial arc portion 368 also extends in a generally circumferential fashion about a central axis C2 of the interface component 350 and defines an outer diameter (or outer radius) substantially equal to an inner tube surface radius 345 of the tube section 341. Consistent with the constructional and operational characteristics above described with reference to FIGS. 2A and 2B, the slider seal assembly 330 above described provides for a full six degrees of translational and rotational movement of the interface component 350 relative to the housing 332 (or relative to the casing 324) due to thermal or vibratory effects occurring during operation.

In various embodiments, a seal ring 380 is disposed within a seal ring groove 381 that extends into the radial arc portion 368 of the outer component surface 362. The seal ring 380 is configured to reduce any gap that exists between the radial arc portion 368 of the outer component surface 362 and the inner tube surface 360. In various embodiments, the seal ring 380 may include a chambered edge 382 on an upper surface of the seal ring 380 and on a lower surface of the seal ring 380, toward an outer radial portion of the seal ring 380 configured to make contact with the inner tube surface 360. In various embodiments, the chambered edge 382 enables the seal ring 380 to swing through the angle 366 or a portion thereof when the interface component 350 is rotated within the seal member 334 and, more particularly, enables the seal ring 380 to maintain contact with the inner tube surface 360 when the interface component 350 is rotated within the seal member 334.

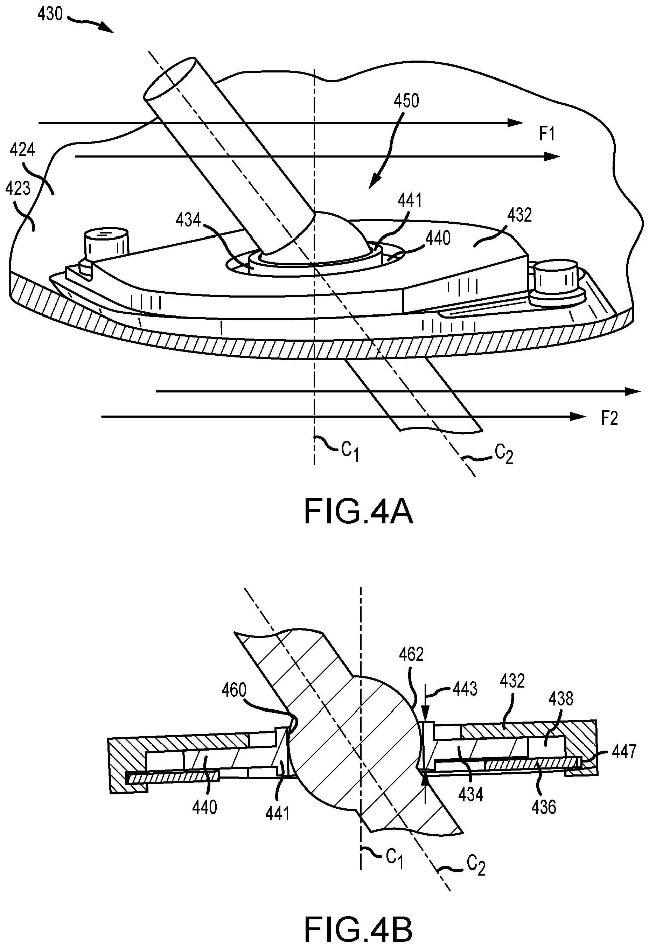

Referring now to FIGS. 4A and 4B, perspective and cross sectional views of a slider seal assembly 430 are provided, in accordance with various embodiments. Similar to the various embodiments above described, the slider seal assembly 430 includes a housing 432, a seal member 434 and a retaining ring 436. The seal member 434 includes a plate section 440 and a tube section 441. The housing 432 includes a recessed opening 438 for receiving the plate section 440 of the seal member 434. The retaining ring 436 is received within a slot 447 of the recessed opening 438 to retain the plate section 440 within the recessed opening 438. In various embodiments, the plate section 440 extends circumferentially about a mid-section of the tube section 441. In various embodiments, the tube section 441 may extend along a length 443, with the plate section 440 extending radially outward from a mid-section of the length 443 and, as described above, provides an inner tube surface 460 configured to slidably engage a corresponding outer component surface 462 of an interface component 450. In various embodiments, the tube section 441 defines a central axis C1 that extends along the length 443 of the tube section 441 and the interface component 450 defines a central axis C2 that extends along at least a portion of where the outer component surface 462 is configured for contact with the inner tube surface 460. As with the slider seal assembly 230 and the slider seal assembly 330 described above, the central axis C1 of the tube section 441 and the central axis C2 of the interface component 450 are not required to be coaxial with one another, especially during operation when the interface component rotates with respect to the tube section 441.

In various embodiments, the housing 432 is configured for mounting to a casing 424 having a face 423 that may, in various embodiments, exhibit either a flat surface or a curved surface. The interface component 450 may comprise any component extending from one side of the casing 424 to the other. For example, in various embodiments, the interface component 450 is one of a borescope plug, a fuel fitting, a bleed port, a conduit, a probe or the like. As described above, the slider seal assembly 430, similar to the slider seal assembly 230 and the slider seal assembly 330 described above, seals the casing 424 at the interface component 450 and provides for a full six degrees of translational and rotational movement of the interface component 450 relative to the housing 432 (or relative to the casing 424) due to thermal or vibratory effects occurring during operation.

During normal operation of a gas turbine engine, such as, for example, the gas turbine engine described above with reference to FIGS. 1A and 1B, there is typically a temperature and pressure difference between a first airflow F1 (e.g., a first air flow passing through a bypass flow path B) and a second airflow F2 (e.g., a second airflow passing through a core flow path C). The temperature difference between the first air flow F1 and the second air flow F2 may cause thermal growth mismatch between the bypass flow path B and the core flow path C. That is, various components or casings of the gas turbine engine may expand and contract in both the radial and axial directions relative to the engine centerline axis A because of the extreme temperature differences. The thermal growth mismatch may result in displacement of the interface component 450 with respect to the slider seal assembly 430 or, more particularly, the housing 432 of the slider seal assembly 430. The slider seal assembly 430 is designed to compensate for the thermal growth mismatch and provide a seal for the pressure difference between the first airflow F1 and the second airflow F2.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A seal assembly, comprising:
a housing;
a seal member configured for disposition within the housing, the seal member comprising a tube section defining an inner tube surface configured to receive an interface component and having a length and an inner tube surface radius that is substantially constant along the length; and
a retaining ring configured to retain the seal member within the housing and to confine translational movement of the seal member with respect to the housing to two degrees of freedom.

2. The seal assembly of claim 1, wherein the seal member includes a plate section connected to the tube section.

3. The seal assembly of claim 2, wherein the plate section extends circumferentially about the tube section.

4. The seal assembly of claim 3, wherein the retaining ring is configured to confine translational movement of the plate section with respect to the housing to the two degrees of freedom.

5. The seal assembly of any preceding claim, wherein the interface component includes an outer component surface configured to slidably engage the inner tube surface along the length.

6. The seal assembly of claim 5, wherein the outer component surface includes a radial arc portion configured to slidably engage the inner tube surface along the length.

7. The seal assembly of claim 6, wherein the radial arc portion defines a radial arc-length that extends circumferentially about a central axis of the interface component.

8. The seal assembly of claim 7, wherein the radial arc portion defines a radius of curvature that is substantially constant along the radial arc-length.

9. The seal assembly of claim 8, wherein the radius of curvature is substantially equal to the inner tube surface radius along the length.

10. The seal assembly of any preceding claim, wherein the tube section defines a central axis and wherein the interface component includes a radial arc portion configured to enable the interface component to translate in a direction along the central axis with respect to the tube section,
wherein, optionally, the radial arc portion defines a radius of curvature that is substantially constant along a radial arc-length and is configured to enable the interface component to rotate in three degrees of freedom with respect to the housing.

11. A slider seal assembly for a gas turbine engine, comprising:
a housing configured for mounting to a casing within the gas turbine engine; and
a seal member configured for disposition within the housing, the seal member comprising a tube section defining an inner tube surface configured to receive an interface component and having a length and an inner tube surface radius, the seal member retained within the housing and configured to confine translational movement of the seal member with respect to the housing to two degrees of freedom.

12. The slider seal assembly of claim 11, wherein the tube section defines a central axis and wherein the interface component includes a radial arc portion configured to enable the interface component to translate in a direction along the central axis with respect to the tube section.

13. The slider seal assembly of claim 12, wherein the radial arc portion defines a radius of curvature that is substantially equal to the inner tube surface radius along a radial arc-length and is configured to enable the interface component to rotate in three degrees of freedom with respect to the tube section,
wherein, optionally, the seal member includes a plate section connected to the tube section,
optionally further comprising a retaining ring configured to retain the seal member within a recessed opening within the housing,
optionally further comprising a seal ring disposed within a seal ring groove that extends into the radial arc portion.

14. A gas turbine engine, comprising:
a casing; and
a slider seal assembly extending through the casing and configured to secure an interface component and enable three degrees of translational freedom and three degrees of rotational freedom of the interface component with respect to the casing, the slider seal assembly comprising
a housing,
a seal member configured for disposition within the housing, the seal member comprising a tube section defining an inner tube surface configured to receive the interface component and having a length and an inner tube surface radius that is substantially constant along the length, and
a retaining ring configured to retain the seal member within the housing and to confine translational movement of the seal member with respect to the housing to two degrees of freedom.

15. The gas turbine engine of claim 14, wherein the tube section defines a central axis and wherein the interface component includes a radial arc portion configured to enable the interface component to translate in a direction along the central axis with respect to the tube section,
wherein, optionally, the radial arc portion defines a radius of curvature that is substantially equal to the inner tube surface radius along a radial arc-length and is configured to enable the interface component to rotate in three degrees of freedom with respect to the tube section.
